# EUROPÄISCHE PATENTANMELDUNG

(11) **EP 0 941 901 A2**
(43) Veröffentlichungstag der Anmeldung: **15.09.1999**
(21) Anmeldenummer: 99103030.5
(22) Anmeldetag: 16.02.1999
(51) Int. Cl.: B60T 7/06, G05G 1/14

(54) **Verbindung zwischen zwei Bauteilen**

(30) Priorität: 10.03.1998 DE 19810198; 26.09.1998 DE 19844211
(71) Anmelder: DaimlerChrysler AG, 70567 Stuttgart (DE)
(72) Erfinder: Berthold, Lothar, 70469 Stuttgart (DE); Entenmann, Heinz, 73650 Winterbach (DE); Frentz, Georg, 72622 Nürtingen (DE); Klemm, Eberhard, 73732 Esslingen (DE); Müller, Martin, 71292 Friolzheim (DE); Vogel, Rainer, 68775 Ketsch (DE)

(57) **Zusammenfassung**

Eine Verbindung zwischen einem ersten Bauteil und einem zweiten Bauteil, bei der das erste Bauteil (1) eine U-förmige Gabel (2) mit zwei im wesentlichen parallelen, sich gegenüberliegenden Wangen (4) aufweist, bei der ein Bereich des zweiten Bauteiles (3) zwischen den Wangen der Gabel des ersten Bauteiles angeordnet ist, und bei der ein Bolzen (7) sich quer zu den Ebenen der Wangen durch diese und durch den dazwischenliegenden Bereich des zweiten Bauteiles erstreckt und einerseits mit dem ersten Bauteil und andererseits mit dem zweiten Bauteil kraftübertragend verbunden ist, derart, daß Schwenkbewegungen zwischen dem ersten Bauteil und dem zweiten Bauteil um die Längsachse des Bolzens möglich sind, soll spielfrei ausgebildet werden. Dies wird erfindungsgemäß dadurch erreicht, daß der Bolzen am zweiten Bauteil befestigt ist, die Wangen der Gabel an ihren freien Enden mit U-förmigen Aufnahmen (5) versehen sind, in welche der Bolzen quer zu seiner Längsachse einbringbar ist, und daß im Bereich der Aufnahmen an jeder Wange Federmittel (8) angebracht sind, die den in die Aufnahmen eingebrachten Bolzen gegen eine innere Wandung der Aufnahmen anliegend vorspannen.

## Beschreibung

Die Erfindung betrifft eine Verbindung zwischen einem ersten Bauteil und einem zweiten Bauteil mit den Merkmalen des Oberbegriffes des Anspruches 1.

Eine derartige Verbindung wird beispielsweise im Kraftfahrzeugbau insbesondere bei der Verbindung eines Bremspedales mit einem Bremsgerät verwendet. Da sich während der Betätigung des Bremspedales der Winkel zwischen dem Bremspedal und dem damit verbundenen Bremsgerät ständig ändert, muß die Verbindung um eine Achse schwenkbar sein, die senkrecht zu einer Ebene liegt, in welcher dieser Winkel zwischen Bremspedal und Bremsgerät ausgebildet ist. Diese Schwenkbarkeit wird bei der Verbindung der eingangs genannten Art dadurch erreicht, daß ein Verbindungsbolzen koaxial zu dieser Schwenkachse angeordnet ist bzw. diese Schwenkachse ausbildet. Um zwischen Bremspedal und Bremsgerät die Verbindung der eingangs genannten Art auszubilden, ist in den Wangen der Gabel des einen Bauteils (z.B. des Bremsgerätes) sowie in dem sich zwischen den Wangen erstreckenden Bereich des anderen Bauteils (z.B. des Bremspedals) jeweils eine Bohrung vorgesehen, durch die sich der Bolzen längserstreckt, wobei er über Formschluß sowohl mit dem Bremsgerät als auch mit dem Bremspedal kraftübertragend verbunden ist. Der Bolzen wird beispielsweise mit Hilfe von Splinten an der Gabel gesichert.

Zwischen dem Außendurchmesser des Bolzens und dem Innendurchmesser der Bohrung im Bremspedal sowie zwischen dem Außendurchmesser des Bolzens und dem Innendurchmesser der Bohrungen in den Gabelwangen des Bremsgerätes ist jeweils ein Spiel unvermeidbar, das sich in diesem Fall außerdem aufaddiert. Durch die Anwendung neuartiger Regel- und Bremssysteme, für welche die Bremspedalstellung einen wichtigen Parameter darstellt, oder Regel- und Bremssysteme, die über das Bremsgerät auf das Bremspedal einwirken, kann ein derartiges Spiel in der Verbindung zwischen Bremsgerät und Bremspedal zu Fehlern bzw. Fehlfunktionen führen. Außerdem kann das Spiel in der Verbindung zwischen Bremspedal und Bremsgerät die Ursache für eine den Fahrkomfort reduzierende Geräuschentwicklung sein.

Die vorliegende Erfindung beschäftigt sich mit dem Problem, für eine Verbindung der eingangs genannten Art eine spielfreie Ausbildung anzugeben.

Dieses Problem wird erfindungsgemäß durch eine Verbindung mit den Merkmalen des Anspruches 1 gelöst.

Die Erfindung beruht auf dem allgemeinen Gedanken, den Bolzen an einem der Bauteile fest zu installieren, wodurch zwischen diesem Bauteil und dem Bolzen kein Spiel vorhanden ist, und den Bolzen am anderen Bauteil unter Federspannung zur Anlage zu bringen, wodurch die Ausbildung von Spiel auch zwischen dem Bolzen und dem anderen Bauteil verhindert wird. Durch die federbelastete Anlage des Bolzens am anderen Bauteil bleiben die auf diese Weise miteinander verbundenen Bauteile gegeneinander um den Bolzen bzw. die Bolzenachse schwenkbar.

Um die Anbindung der Gabel des einen Bauteiles an den am anderen Bauteil fest angebrachten Bolzen möglichst einfach auszugestalten, weisen die Wangen der Gabel eine U-förmige Aufnahme auf. Dabei liegen die sich gegenüberliegenden Schenkel der Aufnahme in einer Ebene, die senkrecht zu derjenigen Ebene verläuft in der die sich gegenüberliegenden Wangen der Gabel liegen. Die U-förmigen Aufnahmen in den Wangen können dabei in derselben Richtung offen sein, wie die U-förmige Gabel. Ebenso ist eine Öffnungsrichtung der Aufnahmen möglich, die beispielsweise senkrecht zur Öffnungsrichtung der Gabel verläuft.

Entsprechend einer bevorzugten Ausführungsform der erfindungsgemäßen Verbindung kann die Wandung der Aufnahme, an welcher der Bolzen federbelastet zur Anlage kommt, zum Bolzen hin konkav ausgebildet sein. Insbesondere weist die konkave Wandung denselben Radius wie der Querschnitt des Bolzens auf. Diese Maßnahmen ermöglichen eine besonders großflächige Kraftübertragung zwischen Gabel und Bolzen und vereinfachen so die spielfreie Positionierung des Bolzens an der Wandung.

Bei einer anderen, besonders vorteilhaften Ausführungsform kann jedes Federmittel als U-förmige Federklammer ausgebildet sein, die an der jeweiligen Wange der Gabel angebracht ist, wobei die offene Seite der Federklammer mit der offenen Seite der Aufnahme der Wange im wesentlichen Deckungsgleich ist und wobei sich gegenüberliegende Federarme der Federklammer den in die Aufnahme eingebrachten Bolzen in einem der offenen Seite der Aufnahme zugewandten Bereich mindestens teilweise umfassen und diesen an die der offenen Seite gegenüberliegende Wandung der Aufnahme anliegend vorspannen. Eine derartige Ausführungsform ermöglicht eine besonders einfache und rasche Montage und Demontage der erfindungsgemäßen Verbindung, die beispielsweise durch einen einfachen Aufsteckvorgang der Gabel auf den Bolzen hergestellt werden kann.

Entsprechend einer anderen bevorzugten Ausführungsform der erfindungsgemäßen Verbindung können Sicherungsmittel vorgesehen sein, die den in die Aufnahmen eingebrachten Bolzen an der Gabel sichern. Mit Hilfe dieser Sicherung wird ein ungewolltes Lösen der insbesondere durch Aufstecken der Verbindungsbestandteile aufeinander ausgebildeten Verbindung.

Bei einer besonders vorteilhaften Ausgestaltung können diese Sicherungsmittel jeweils in Form einer quer zu den Wangen flexiblen Zunge ausgebildet sein, die sich im wesentlichen parallel zu einer der Wangen erstreckt, an dieser bzw. an der Gabel in einem von der offenen Seite der Aufnahme der Wange abgewandten Bereich befestigt ist und eine Öffnung enthält, in die der gesicherte Bolzen hineinragt und dabei radial zumindest in einem der offenen Seite der Aufnahme in der Wange zugewandten Bereich von einem Innenumfang der Öffnung eingefaßt ist. Diese Ausgestaltung bewirkt, daß bei in die Gabelwangen eingebrachtem Bolzen die Zungen aufgrund der entsprechend plazierten Öffnungen jeweils an einem der axialen Enden des Bolzen einrasten oder einschnappen. Dadurch wird der Bolzen in Auszugsrichtung, d.h. in Richtung auf die offenen Seiten der Aufnahmen der Wangen, formschlüssig gesichert. Da eine derartige Sicherung nur für den Fall vorgesehen ist, daß die Auszugskräfte die Federkräfte der Federmittel übersteigen, kann zwischen dem Bolzen und der Öffnung in der Zunge ein Spiel toleriert werden.

Um die Anbindung der Gabel des einen Bauteiles an den am anderen Bauteil fest angebrachten Bolzen möglichst einfach und sicher auszugestalten, können bei einer Weiterentwicklung der Erfindung die Aufnahmen der Gabelwangen jeweils als einseitig offener Schlitz ausgebildet sein, wobei jeder Schlitz bezüglich seines offenen Endes derart in den Wangen ausgerichtet ist, daß der in den Schlitz eingebrachte Bolzen zumindest in den Kraftübertragungsrichtungen formschlüssig durch Wandungsbereiche des Schlitzes eingefaßt bzw. begrenzt ist. Aufgrund dieser Maßnahme kann die erfindungsgemäße Verbindung zumindest nicht in den Richtungen der von ihr zu übertragenden bidirektionalen Zug- und Druckkräfte gelöst werden. Dabei bewirken die Federmittel, daß der in den Schlitz eingebrachte Bolzen gegen einen Wandungsbereich des Schlitzes vorgespannt ist, so daß zum einen gegebenenfalls zwischen Schlitz und Bolzen vorhandenes Spiel durch eine vorgespannte Positionierung und somit durch eine definierte Anlage ausgeglichen werden kann. Zum anderen kann der Bolzen relativ zur Gabel aus der definierten Relativlage nur entgegen der Federvorspannung verstellt werden, so daß ein Entfernen des Bolzens von der Gabel, das heißt ein Herausbewegen des Bolzens aus dem zugehörigen Schlitz durch die Federmittel gesichert ist.

Entsprechend einer vorteilhaften Ausführungsform der erfindungsgemäßen Verbindung kann ein durch Zugkräfte vom Bolzen belasteter Wandungsbereich des Schlitzes derart geformt sein, daß sich eine Führung des Bolzens im Schlitz ausbildet, dahingehend, daß bei zwischen Bolzen und Gabel herrschenden Zugkräften zumindest keine den Bolzen aus dem Schlitz herausführende Kraftkomponente insbesondere jedoch eine den Bolzen in den Schlitz hineinzwingende Kraftkomponente ausgebildet wird. Insbesondere kann dabei der genannte Wandungsbereich im wesentlichen senkrecht zur Kraftrichtung ausgerichtet sein. Durch diese Maßnahme wird ein versehentliches Lösen der Verbindung sicher verhindert.

Bei einer anderen Ausführungsform der erfindungsgemäßen Verbindung kann ein durch Druckkräfte vom Bolzen belasteter Wandungsbereich des Schlitzes derart geformt sein, daß sich eine Führung ausbildet, dahingehend, daß bei zwischen Bolzen und Gabel wirkenden Druckkräften eine den Bolzen in den Schlitz hineinzwingende Kraftkomponente entsteht. Auch diese Maßnahme bewirkt eine Selbstsicherung der Verbindung durch die von ihr zwischen den Bauteilen übertragenen Kräfte. Es ist klar, daß es bei einer Verbindung, bei welcher es auf die definierte Relativlage zwischen Gabel und Bolzen ankommt, diese definierte Relativlage mit der durch die Führung im Falle einer Belastung erreichten Endlage des Bolzens im Schlitz übereinstimmt. Das bedeutet beispielsweise bei einer Verbindung, bei der die definierte Relativlage für die Übertragung von Druckkräften entscheidend ist, daß die Führung des durch die Druckkräfte belasteten Wandbereiches des Schlitzes den Bolzen in diese Relativlage zwingt, in die der Bolzen auch durch die Federmittel vorgespannt ist und in der der Bolzen am entsprechenden Wandbereich anliegt.

Gemäß einer bevorzugten Ausführungsform der erfindungsgemäßen Verbindung weisen die Federmittel einen ersten Federschenkel auf, der den Bolzen relativ zur Gabel im wesentlichen quer zur Kraftübertragungsrichtung und quer zur Bolzenlängsachse gegen die Wandung des Schlitzes anliegend vorspannt, wodurch der Bolzen relativ zur Gabel in einer ersten Koordinatenrichtung einer Schlitzebene eine definierte Position erhält.

Bei einer Verbindung nach der Erfindung, bei der die spielfreie, das heißt definierte Relativlage zwischen Bolzen und Gabel, für die Übertragung von Druckkräften entscheidend ist, weisen die Federmittel einen zweiten Federschenkel auf, der den Bolzen relativ zur Gabel in Kraftübertragungsrichtung gegen den bei Druckkräften vom Bolzen belasteten Wandungsbereich anliegend vorspannt, wodurch die Relativposition zwischen Bolzen und Gabel auch in einer zweiten Koordinatenrichtung der Schlitzebene definiert ist. Bei einer anderen Verbindung nach der Erfindung, bei der die Relativlage zwischen Bolzen und Gabel für die Übertragung von Zugkräften entscheidend ist, wird der zweite Federschenkel dementsprechend so ausgebildet bzw. angeordnet, daß der Bolzen gegen den bei Zugkräften belastete Wandungsbereich des Schlitzes anliegend vorgespannt ist.

Weitere wichtige Vorteile und wesentliche Merkmale der vorliegenden Erfindung sind in den Unteransprüchen, in den Zeichnungen und in der nachfolgenden Beschreibung bevorzugter Ausführungsbeispiele anhand der Zeichnungen wiedergegeben. Es zeigen, jeweils schematisch,
- Fig. 1: eine Seitenansicht auf eine Verbindung nach der Erfindung zwischen zwei Bauteilen,
- Fig. 2: eine Detailansicht eines Bereiches aus Fig. 1, jedoch ohne Federmittel,
- Fig. 3 A+B: eine Seitenansicht (A) und eine perspektivische Ansicht (B) auf eine Federklammer,
- Fig. 4: eine perspektivische Ansicht eines in einer Gabel mit den Federklammern aus Fig. 3 gehalterten Bolzens,
- Fig. 5 A+B: eine Seitenansicht (A) und eine perspektivische Ansicht (B) einer anderen Ausführungsform der Federklammer,
- Fig. 6: eine perspektivische Ansicht auf einen mit Hilfe der Federklammer aus Fig. 5 in der Gabel gehalterten Bolzen,
- Fig. 7 A+B: eine Seitenansicht (A) und eine perspektivische Ansicht (B) einer weiteren Ausführungsform der Federklammer,
- Fig. 8: eine perspektivische Ansicht auf den Verbindungsbereich, in dem mit den Federklammern aus Fig. 7 ein Bolzen in der Gabel gehalten ist,
- Fig. 9: eine perspektivische Ansicht auf ein an der Gabel befestigbares Bauteil, das Sicherungsmittel und Federmittel enthält,
- Fig. 10: eine perspektivische Teilansicht auf eine Gabel zur Aufnahme eines Bauteiles entsprechend Fig. 9,
- Fig. 11: ein Bauteil wie in Fig. 9, jedoch in einer anderen Ausführungsform,
- Fig. 12 A+B: zwei perspektivische Ansichten wie in den Fig. 4 und 6, jedoch mit einer anderen Ausführungsform der Federklammer,
- Fig. 13: ein mit einer Gabel ausgestattetes ersten Bauteil getrennt von einem mit Bolzen ausgestatteten zweiten Bauteil in einer perspektivischen Ansicht bei einer anderen Ausführungsform der Erfindung,
- Fig. 14: eine Seitenansicht auf die Verbindung aus Fig. 13 und
- Fig. 15: eine perspektivische Ansicht auf eine weitere Ausführungsform der erfindungsgemäßen Verbindung.

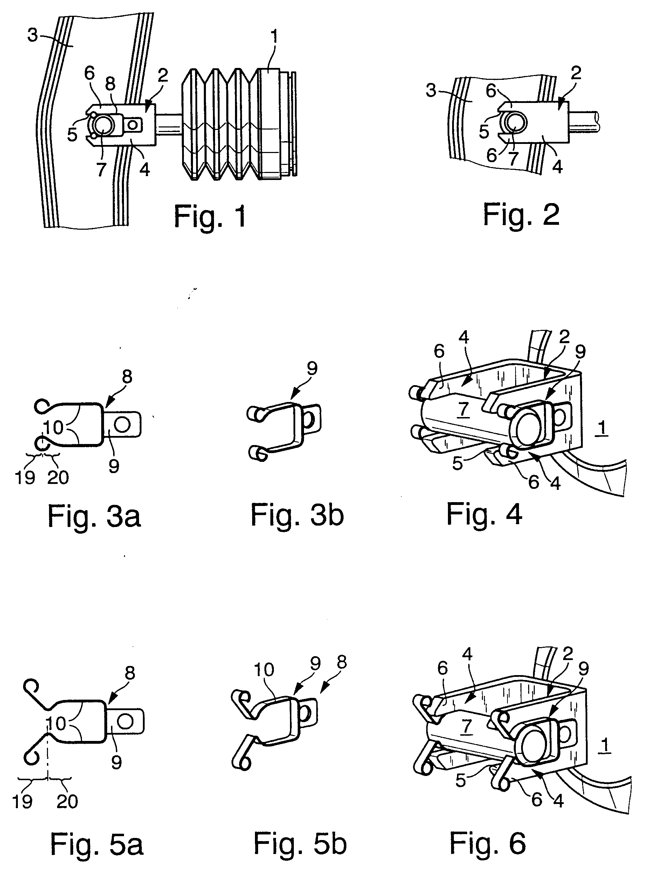

Entsprechend Fig. 1 ist ein im Ausführungsbeispiel als Bremsgerät ausgebildetes erstes Bauteil 1 mit einer Gabel 2 ausgestattet und mit dieser an einem im Ausführungsbeispiels als Bremspedal ausgebildeten zweiten Bauteil 3 verbunden. Zu diesem Zweck ist die Gabel 2 U-förmig oder maulförmig ausgebildet, was am besten in den Fig. 4,6,8 und 12 erkennbar ist.

Die Gabel 2 weist zwei im wesentlichen parallel verlaufende, sich gegenüberliegende Wangen 4 auf, die ihrerseits ebenfalls U-förmig oder maulförmig ausgebildet sind bzw. eine U-förmige oder maulförmige Aufnahme 5 enthalten. Die U-förmige Aufnahme 5 jeder Wange 4 wird dabei durch zwei sich gegenüberliegende, parallel verlaufende Schenkel 6 begrenzt. Dabei liegen sich die Schenkel 6 einer Wange 4 jeweils in einer Ebene gegenüber, die bezüglich einer Ebene, in der sich die Wangen 4 der Gabel 2 gegenüberliegen, im wesentlichen senkrecht verläuft.

Zum Anschluß des zweiten Bauteiles 3 bzw. des Bremspedales 3 ragt dieses mit einem Bereich zwischen die Wangen 4 der Gabel 2 in die maulförmige Öffnung der Gabel 2 hinein. In diesem Bereich des Bremspedals 3 ist ein Bolzen 7 am Bremspedal 3 befestigt. Dabei kann diese Befestigung beispielsweise durch Einpressen des Bolzens 7 in eine entsprechende Bohrung unter Ausbildung einer Preßpassung eingebracht sein. Ebenso kann der Bolzen 7 am Bremspedal 3 angeschweißt sein. Außerdem ist eine Ausführungsform möglich, bei welcher der Bolzen 7 aus zwei Teilbolzen besteht, die beiderseits des Bremspedals 3 befestigt sind.

Der Bolzen 7 ist so am Bremspedal 3 angebracht, daß er etwa senkrecht zu den parallelen Ebenen verläuft, in denen die Wangen 4 der Gabel 2 liegen. Zum Ausbilden der erfindungsgemäßen Verbindung wird die Gabel 2 so auf den Bolzen 7 aufgesteckt, daß dieser in die Aufnahmen 5 der Wangen 4 eindringt. Auf der den offenen Seiten der Aufnahmen 5 gegenüberliegenden Seite ist das Maul bzw. die Aufnahme 5 der Wangen 4 abgerundet ausgebildet und insbesondere mit demselben Radius versehen, den auch der Bolzen 7 bzw. dessen Querschnitt aufweist. Diese besondere Ausgestaltung des Aufnahme- oder Maulgrundes ist in Fig. 2 besonders deutlich erkennbar, in der zur Veranschaulichung nachfolgend beschriebene Federmittel 8 weggelassen sind.

In den Fig. 1,4,6 und 8 wird veranschaulicht, wie mit Hilfe von Federmitteln 8 der Bolzen 7 in das Maul bzw. in die Aufnahme 5 der Wangen 4 hineingezogen und gegen die abgerundete innere Wandung bzw. gegen den Grund des Maules oder der Aufnahme 5 vorgespannt wird. Zum besseren Verständnis ist in den Fig. 4,6,8 und 12 jeweils das Bremspedal 3 nicht dargestellt sondern lediglich der mit dem Bremspedal 3 fest verbundene Bolzen 7.

Aufgrund der festen Anbindung des Bolzen 7 an das Bremspedal 3 kann sich bremspedalseitig kein Spiel zwischen Bolzen 7 und Bremspedal 3 ausbilden. Ebenso wird die Ausbildung eines Spieles bremsgeräteseitig durch die Vorspannung des Bolzens 7 gegen die Wandung der Wangenaufnahme 5 verhindert. Dabei wird jedoch die Verschwenkbarkeit der Bauteile 1 und 2 gegeneinander um den als Schwenkachse dienenden Bolzen 7 nicht behindert. Auf diese Weise kann somit eine spielfreie Verbindung zwischen den Bauteilen 1 und 3 hergestellt werden.

Die zur Erzeugung der Vorspannung des Bolzens 7 gegen die Wandung bzw. gegen den Grund der Wangenaufnahme 5 verwendeten Federmittel 8 sind in den dargestellten Ausführungsbeispielen als U-förmige oder maulförmige Federklammern 9 ausgebildet, die jeweils zwei sich gegenüberliegende Federarme 10 aufweisen.

Bei den dargestellten Ausführungsformen weisen die sich gegenüberliegenden Federarme 10 in einem der Maulöffnung bzw. der offenen Seite der U-förmig ausgebildeten Federklammer 9 einen Bereich auf, in dem die Federarme 10 einen geringeren Abstand voneinander aufweisen als in den übrigen Bereichen der Federklammer 9. Mit anderen Worten, die Federarme 10 sind derart geformt, daß sie ausgehend von der offenen Seite der U-förmigen Federklammer 9 einen ersten Bereich 19 bilden, in dem der Abstand zwischen den Federarmen 10 von einem Wert, der größer als der Durchmesser des Bolzens 7 ist, auf einen Wert abnimmt, der kleiner als der Durchmesser des Bolzens 7 ist, an den sich ein zweiter Bereich 20 anschließt, in dem der Abstand zwischen den Federarmen 10 wieder zunimmt. Insbesondere können die Federarme 10 dabei so geformt sein, daß der Abstand zwischen den Federarmen 10 im zweiten Bereich 20 maximal bis zum Durchmesser des Bolzens 7 zunimmt.

Diese Maßnahme bewirkt, daß der in die Wangenaufnahme 5 und somit in die Federklammer 9 eingebrachte Bolzen 7 von diesen aufeinanderzu geformten Bereichen der Federarme 10 zumindest teilweise umgriffen bzw. hintergriffen wird. Dabei sind die Federklammern 9 derart an den Wangen 4 positioniert, daß - wenn der Bolzen 7 an der der offenen Seite der Wangenaufnahme 5 gegenüberliegenden Wandung zur Anlage kommt - die Federarme 10 durch den Bolzen 7 noch soweit verformt bzw. auseinandergebogen sind, daß diese eine geeignete Anpreßkraft auf den Bolzen 7 ausüben, damit dieser im Rahmen der üblichen Verwendungen sicher spielfrei gehalten ist. Denn durch das Eindringen des Bolzens 7 in die Federklammer 9 werden die sich gegenüberliegenden Federarme 10 voneinander weggedrängt. Wenn der vorgeschriebene Abschnitt der Federklammer 9 den Bolzen 7 hintergreift, bewirkt die Federkraft der Federarme 10 deren Rückstellung aufeinander zu, wobei die Ausbildung des zweiten Bereiches, der zwischen den Federarmen 10 mit dem zur offenen Seite der Federklammer 9 hin abnehmenden Abstand ausgebildet ist, bewirkt, daß diese Federkräfte der Federarme 10 den Bolzen 7 aufgrund der Form des zweiten Bereiches der Federklammer 9 quer zur Federkraft von der offenen Seite der Wangenaufnahme 5 weg gegen deren Wandung antreiben.

Um das Aufstecken der Gabel 2 auf den Bolzen 7 zu vereinfachen, sind entsprechend den Fig. 3 und 4 die freien Enden der Federarme 10 nach außen umgebogen, wodurch die Federarme 10 beim Aufstecken auf den Bolzen 7 selbsttätig, sich voneinander entfernend vom Bolzen 7 verdrängt werden können.

Bei einer anderen Ausführungsform entsprechend den Fig. 5 und 6 ist der Bereich der Federarme 10, der bei eingebrachtem Bolzen 7 an diesem zur Anlage kommt, abgerundet ausgebildet, so daß durch die Federarme 10 größere Federkräfte auf den Bolzen 7 übertragen werden können. Um das Einbringen des Bolzens 7 in den Raum zwischen den Federarmen 10 beim Aufstecken der Gabel 2 auf den Bolzen 7 zu vereinfachen, ist im ersten Bereich 19 an den freien Enden der Federarme 10 jeweils ein Abschnitt ausgebildet, in dem diese einen im wesentlichen geradlinigen Verlauf aufweisen, wobei der Abstand zwischen den gegenüberliegenden Federarmen zum freien Ende der Federarme 10 hin zunimmt. Entsprechend der Seitenansicht in Fig. 5A ergibt sich dabei eine etwa trichterförmige Gestalt.

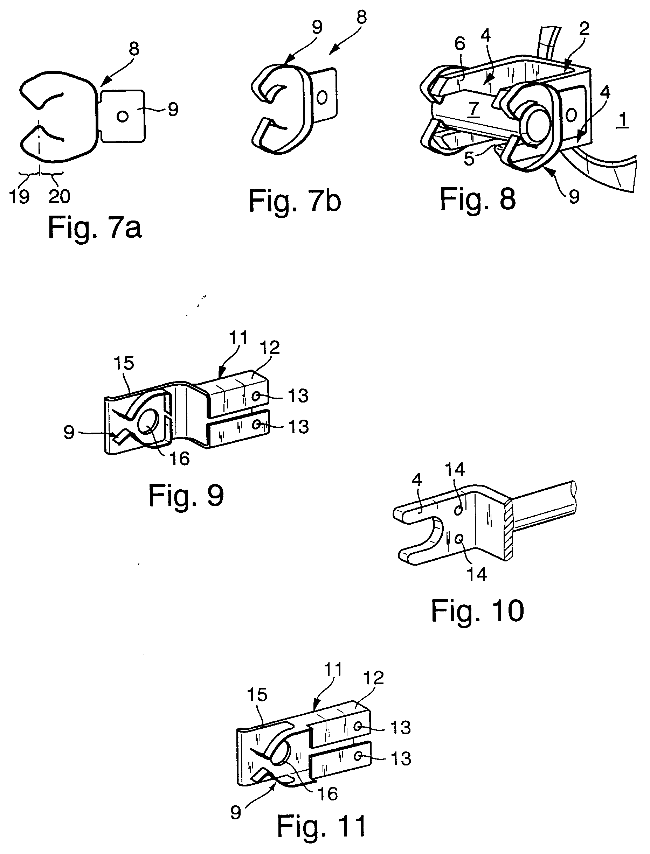

Eine andere Ausführungsform ist in den Fig. 7 und 8 wiedergegeben. Bei dieser Ausführungsform sind im zweiten Bereich 20 an den freien Enden der Federarme 10 Abschnitte ausgebildet, die an die Kontur des Bolzens 7 angeglichen sind und sich so relativ großflächig am Bolzen 7 abstützen können. Eine derartige Ausführungsform zeichnet sich durch eine hohe Federkraft und somit durch eine hohe Sicherung gegen herausziehen des Bolzens 7 aus der Gabel 2 aus. Außerdem gewährleistet eine hohe Anpreßkraft des Bolzens 7 an die Wandung der Aufnahmen 5 die Spielfreiheit der erfindungsgemäßen Verbindung auch bei größeren, zwischen Bremsgerät 1 und Bremspedal 3 auftretenden (Zug-) Kräften. Auch bei dieser Ausführungsform ist ein etwa trichterförmiger Eingangsbereich (vgl. die Seitenansicht in Fig. 7A) ausgebildet, um das Aufstecken der Gabel auf den Bolzen 7 zu vereinfachen.

Die in den Fig. 1, 3 bis 8 dargestellten Federklammern 8 werden beispielsweise durch einen Schweißpunkt an der jeweiligen Wange 4 der Gabel 2 befestigt.

Bei anderen Ausführungsformen entsprechend den Fig. 9 bis 12 sind die Federklammern 9 nicht direkt an der jeweiligen Wange 4 der Gabel 2 befestigt, sondern an einem Bauteil 11 angeordnet, das seinerseits einen als Steckschuh ausgebildeten Bereich 12 aufweist, der auf die jeweilige Wange 4 der Gabel 2 aufsteckbar ist. Zur Verankerung des Steckschuhs 12 an der Wange 4 sind einerseits am Steckschuh 12 wangenseitig linsenförmige Erhebungen 13 angeordnet, die mit korrespondierenden Öffnungen 14 in der Wange 4 zusammenwirken. Dabei rasten die Erhebungen 13 clipartig in die Öffnungen oder Vertiefungen 14 der Wange 4 ein, wodurch eine kraftschlüssige Verbindung zwischen dem Bauteil 11 und der Wange 4 ausgebildet wird. Mit einer derartigen Clipverbindung lassen sich ausreichend große Haltekräfte erzielen.

An den steckschuhartigen Bereich 12 des Bauteils 11 schließt sich eine Zunge 15 an, die im wesentlichen parallel zur zugehörigen Wange 4 verläuft. Diese Zunge 15 ist mit einer Öffnung oder Bohrung 16 versehen, die bei an der Wange 4 montierten Bauteil 11 bezüglich der Wangenaufnahme 5 derart plaziert ist, daß sich ein axiales Ende des Bolzens 7 durch diese Öffnung 16 hindurch erstrecken kann oder zumindest in diese Öffnung 16 hinein erstrecken kann, wenn die Gabel 2 auf den Bolzen 7 aufgesteckt ist. Auf diese Weise wird eine formschlüssige Verbindung zwischen dem Bolzen 7 und der Zunge 15 des Bauteils 11 und folglich auch mit der Wange 4 der Gabel 2 ausgebildet. Die mit der Öffnung 16 ausgestattete Zunge 15 bildet dadurch eine effektive Sicherung der erfindungsgemäßen Verbindung gegen ein ungewolltes Abziehen oder Herausziehen des Bolzen 7 aus der Gabel 2. Dabei ist es besonders zweckmäßig, wenn - wie hier - die Sicherungsmittel (Zunge 15) und die Federmittel (Federklammer 9) einer Wange 4 jeweils zu diesem einen Bauteil 11 zusammengefaßt sind, das an der jeweiligen Wange 4 bzw. an der Gabel 2 befestigbar ist. Auf diese Weise kann ein preiswertes Bauteil 11 ausgebildet werden, das als Doppelfunktion die Sicherung und die Vorspannung des Bolzens 7 in der Gabel 2 ausführt.

Um insbesondere die Montage, das heißt das Aufstecken der Gabel 2 auf den Bolzen 7 zu erleichtern, sind die Zungen 15 mit einer Art Einführbereich ausgestattet. Dieser wird dadurch ausgebildet, daß die sich gegenüberliegenden Zungen 15 der an gegenüberliegenden Wangen 4 befestigten Bauteile 11 an dem von der Öffnung 16 abgewandten Ende einen Abstand voneinander aufweisen, der größer ist als die Länge des Bolzens 7. Beim Aufstecken der Gabel 2 auf den Bolzen 7 bewirkt dieser dann eine Verdrängung der Zungen 15 in Längsrichtung des Bolzens 7, von diesem weg. Sobald der Bolzen 7 dann deckungsgleich mit den Öffnungen 16 der Zungen 15 angeordnet ist, federn die Zungen 15 in ihre Ausgangslage zurück, wobei dann der Bolzen 7 selbsttätig in einen Sicherungszustand einrastet. Damit die Zungen 15 in Längsrichtung des Bolzens 7 bzw. quer zur Ebene der jeweils zugeordneten Wange 4 federnd nachgiebig sein können, bestehen sie aus einem entsprechenden flexiblen Material.

Bei der Ausführungsform entsprechend Fig. 9 ist die Federklammer 9 an der Wange 15 angebracht, während die Federklammer 9 bei der Ausführungsform entsprechend Fig. 11 an dem als Steck- oder Klemmschuh ausgebildeten Bereich 12 ausgebildet ist. Bei der Variante gemäß Fig. 11 können die Sicherungsmittel (Zunge 15, Öffnung 16) und die Federmittel (Federklammer 9) an verschiedenen Seiten der jeweiligen Wange 4 mit dem Bolzen 7 zusammenwirken.

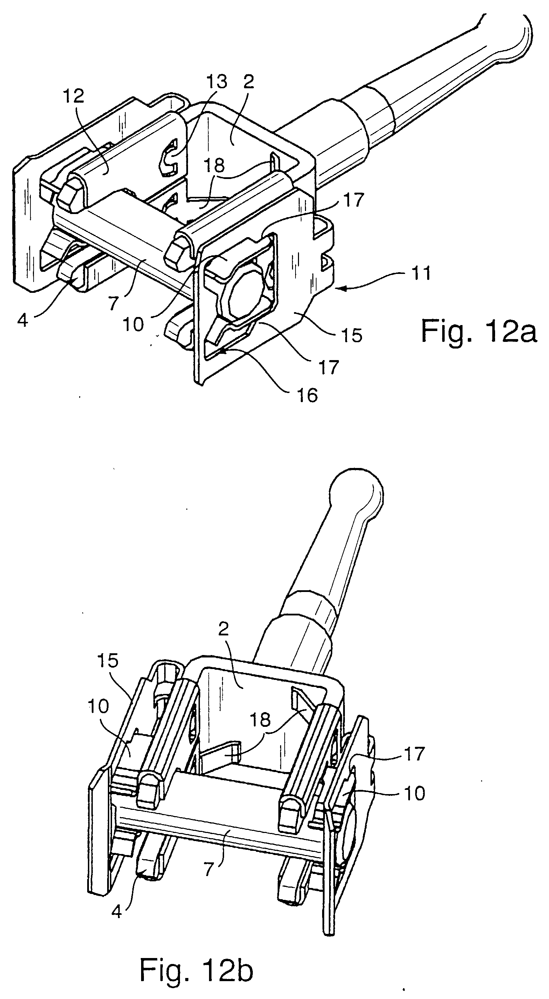

Bei einer anderen Variante der erfindungsgemäßen Verbindung, bei der wie in den Ausführungsbeispielen entsprechend den Fig. 9 und 11, daß Federmittel 8 bzw. die Federklammer 9 an dem den Steckschuh 12 aufweisenden Bauteil 11 angeordnet ist, können sich entsprechend Fig. 12 die Federarme 10 der Federklammern 9 durch die Öffnung 16 der Zunge 15 hindurcherstrecken. Auf diese Weise werden die Federarme 10 zusätzlich in der Eingriffstellung durch den Innenumfang der Öffnung 16 gesichert. Die Federklammer 9 ist zu diesem Zweck an dem den Klemmschuh bildenden Bereich 12 des Bauteiles 11 angeformt und die Öffnung 16 weist eine zur Aufnahme der Federarme 10 geeignete Innen-Kontur auf. Die Zunge 15 und der Steckschuh 12 sind bei der Variante entsprechend Fig. 12 parallel zueinander, einander gegenüberliegend angeordnet, wobei das Bauteil 11 eine U-förmige Gestalt erhält.

Zur Unterstützung der durch die Federarme 10 auf den Bolzen 7 aufbringbaren Federkraft sind am Innenumfang der Öffnung 16 Nasen 17 als Verstärkungsmittel vorgesehen, die, wenn der Bolzen 7 zwischen die Federarme 10 eingebracht ist und die Zunge 15 sichernd am Bolzen 7 eingerastet ist, außen an den Federarmen 10 zur Anlage kommen und so die Vorspannkraft der Federmittel 8 verstärken.

Die Klemmschuhe 12 sind an ihrem von der Maulöffnung 5 abgewandten Ende mit Stützfingern 18 versehen, die sich am Grund der Gabel 2 abstützen, um die Erhebungen 13 in den entsprechenden Vertiefungen oder Öffnungen 14 der Wangen 4 der Gabel 2 zu verspannen. Bei der Ausführungsform entsprechend Fig 12 sind diese Erhebungen 13 in Form von ausgestellten Bereichen des Steckschuhs 12 ausgebildet.

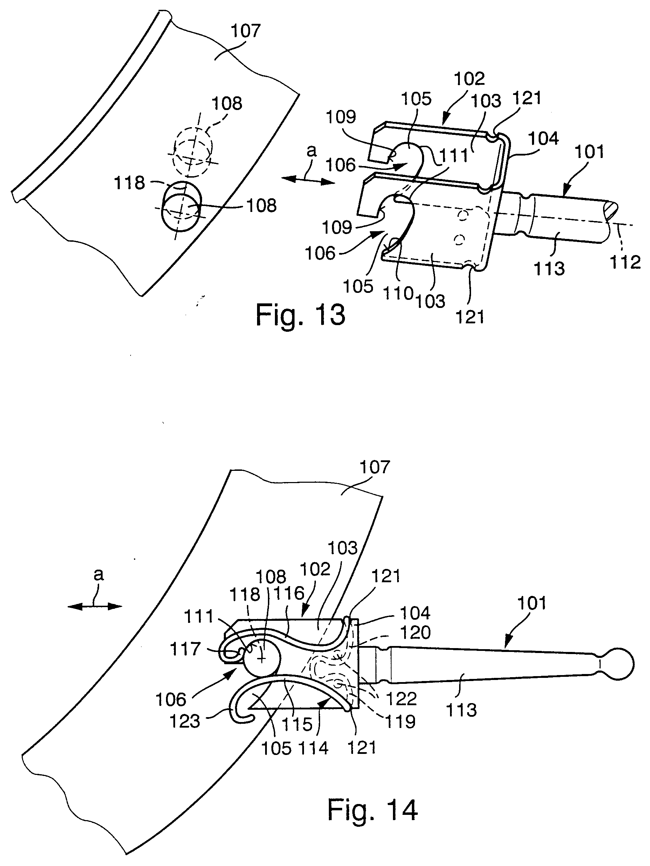

Entsprechend Fig. 13 ist ein erstes Bauteil 101 mit einer im wesentlichen U-förmigen Gabel 102 ausgestattet, die zwei parallel zueinander verlaufende, im wesentlichen eben ausgebildete Wangen 103 sowie eine diese verbindende Basis 104 aufweist. Das erste Bauteil 101 ist beispielsweise eine Betätigungsstange 113 eines Bremsgerätes, das zur Steuerung und Regelung eines Bremssystems eines Kraftfahrzeuges dient.

Jede Wange 103 enthält einen Schlitz 105, der an einem Ende eine Öffnung 106 aufweist. Diese Öffnung 106 ist entsprechend der dargestellten bevorzugten Ausführungsform vom ersten Bauteil 101 weggerichtet.

Entsprechend Fig. 13 weist ein zweites Bauteil 107, das beispielsweise ein Bremspedal sein kann, zwei seitlich vorstehende Bolzen 108 auf. Anstelle von zwei einzelnen, seitlich am zweiten Bauteil 107 angebrachten Bolzen 108 kann auch ein einziger, durchgehender Bolzen 108 vorgesehen sein, der das zweite Bauteil 107 durchdringt, wobei er beispielsweise über eine Schweißverbindung oder eine Presspassung mit dem zweiten Bauteil 107 verbunden ist.

Zur Ausbildung der erfindungsgemäßen Verbindung wird das zweite Bauteil 107 relativ zum ersten Bauteil 101 derart bewegt, daß die Bolzen 108 unterhalb eines vom ersten Bauteil 101 abgewandten ersten Wandungsbereich 109 jeweils durch die Öffnung 106 in den Schlitz 105 eindringen. Die Einführbewegung verläuft dabei etwa parallel zu den mit a gekennzeichneten Kraftübertragungsrichtungen. Ein dem ersten Bauteil 101 zugewandter zweiter Wandungsbereich 110 ist bei dem dargestellten Ausführungsbeispiel rampenförmig ausgebildet, dahingehend, daß der Bolzen 108 im Verlaufe der vorstehend beschriebenen Einführbewegung in den Schlitz 105 mit diesem zweiten Wandungsbereich 110 in Kontakt kommt und daran abgleitend, entsprechend Fig. 13 nach oben, das heißt in den Schlitz 105 hineingeführt wird. Beim Erreichen einer Endlage des Bolzens 108 im Schlitz 105 wird der Bolzen 108 von einer den ersten und den zweiten Wandungsbereich 109 bzw. 110 umfassenden Wandung 111 in den Kraftübertragungsrichtungen radial eingefaßt. Der Schlitz 105 weist somit einen Öffnungsabschnitt ohne Umfassung für den Bolzen 108 in Zugrichtung auf, der ein Einbringen bzw. Herausnehmen des Bolzens 108 in den bzw. aus dem Schlitz 105 in Richtung der Zugbelastung ermöglicht, und weist außerdem einen Sitzabschnitt mit Umfassung des Bolzens 108 in Zugrichtung auf, der die den Bolzen 108 zumindest in den Kraftübertragungsrichtungen a umfassende Wandung 111 aufweist. Die den Bolzen 108 im Sitzabschnitt umfassende Wandung 111 ist vorzugsweise zum Bolzen 108 hin konkav ausgebildet und kann insbesondere einen Radius aufweisen, der gleich groß wie oder größer als der Radius des Bolzens 108 ist.

Mit Hilfe der erfindungsgemäßen Verbindung sollen zwischen dem ersten Bauteil 101 und dem zweiten Bauteil 107 bidirektionale Zug- und Druckkräfte übertragen werden, deren Kraftrichtungen durch einen Doppelpfeil a angedeutet sind. Bei als Bremsgerät und Bremspedal ausgebildetem ersten und zweiten Bauteil werden vorzugsweise Druckkräfte übertragen und die Kraftübertragungsrichtungen a verlaufen parallel zu einer Längsachse 112 der Stange 113, welche die Gabel 102 mit dem Bremsgerät verbindet.

Entsprechend Fig. 14 ist die Gabel 102 wenigstens an einer der beiden Wangen 103 mit einer Federklammer 114 ausgestattet. Diese Federklammer 114 weist einen ersten Federschenkel 115 auf, der mit Bezug auf den Bolzen 108 eine konvex gebogene Form aufweist. Ein der Öffnung 106 des Schlitzes 105 zugeordneter Endbereich 123 des ersten Federschenkels 115 bildet eine Einführhilfe, die das Einbringen des Bolzens 108 in den Schlitz 105 vereinfacht. Gleichzeitig wird durch den Einbringvorgang des Bolzens 108 in den Schlitz 105 der erste Federschenkel entsprechend Fig. 14 nach unten verdrängt, wodurch sich eine nach oben gerichtete Rückstellkraft ausbildet. Bei der in Fig. 14 dargestellten Endlage des Bolzens 108 im Sitzabschnitt des Schlitzes 105 ist der erste Federschenkel 115 noch immer aus einer entspannten Normallage nach unten verdrängt, so daß der erste Federschenkel 115 eine Kraft auf den Bolzen 108 übertragen kann, mit der dieser nach oben gegen die Wandung 111 des Schlitzes 105 vorgespannt ist. Um den Bolzen 108 aus dem Schlitz 105 herausbewegen zu können, muß demnach zunächst eine zunehmende Federkraft des ersten Federschenkels 115 überwunden werden, wodurch ein selbsttätiges Lösen der Verbindung verhindert wird. Der erste Federschenkel 115 ist daher derart geformt und bezüglich des Öffnungsabschnittes und des Sitzabschnittes angeordnet, daß der Bolzen 108 nur entgegen der Federkraft des ersten Federschenkels 115 in den Öffnungsabschnitt eingebracht bzw. aus diesem herausgenommen werden kann, wobei der erste Federschenkel 115 den Bolzen 108 nach Art einer Rastverbindung in den Sitzabschnitt zwingt, wenn der Bolzen 108 hinreichend in den Öffnungsabschnitt hineinbewegt ist.

Die Federklammer 114 weist außerdem einen zweiten Federschenkel 116 auf, der so gebogen und bezüglich des Schlitzes 105 angeordnet ist, daß ein in einer Normallage (d.h. in einer entspannten Lage ohne in den Schlitz 105 eingebrachten Bolzen 108) in den Schlitz 105 einragender Endbereich 117 des zweiten Federschenkels 116 durch das Einbringen des Bolzens 108 in den Schlitz 105 aus dem Schlitz 105 heraus verdrängt wird. Die sich dabei ausbildende Rückstellkraft des zweiten Federschenkels 116 belastet den Bolzen 108 und bringt diesen an den dem ersten Bauteil 101 zugewandten Wandbereich 110 des Schlitzes 105 unter Vorspannung zur Anlage.

Vorzugsweise ist die Kontaktstelle des zweiten Federschenkels 116 bzw. dessen Endbereiches 117 am Bolzen 108 so gewählt, daß die Krafteinleitung der Federkraft in den Bolzen 108 entsprechend Fig. 14 unterhalb einer Längsmittelachse 118 des Bolzens 108 erfolgt.

Durch die Vorspannung des Bolzens 108 gegen die Wandung 111 des Schlitzes 105 in der Gabel 102 wird ein gegebenenfalls zwischen Bolzen 108 und Schlitz 105 vorhandenes Spiel ausgeglichen. Aufgrund der durch die Federschenkel 115 und 116 der Federklammer 114 bewirkten zwei unterschiedlichen Richtungen der Vorspannkräfte, mit denen der Bolzen 108 an der Wandung 111 des Schlitzes 105 zur Anlage kommt, wird die Relativlage zwischen Bolzen 108 und Gabel 102 und somit zwischen erstem und zweitem Bauteil 101 bzw. 107 definiert. Da beispielsweise zwischen einem Bremspedal und einem Bremsgerät üblicherweise nur für zu übertragende Druckkräfte eine genaue Relativlage zwischen den Bauteilen 101 und 107 gewährleistet werden muß, ist beim dargestellten Ausführungsbeispiel der Bolzen 108 gegen den bei Druckkräften vom Bolzen 108 belasteten, dem ersten Bauteil 101 zugewandten Wandbereich 110 vorgespannt.

Damit ein versehentliches Lösen der erfindungsgemäßen Verbindung durch Zugkräfte zwischen den beiden Bauteilen 101 und 107 verhindert werden kann, wird der Bolzen 108 in der in Fig. 14 dargestellten erwünschten Relativlage zwischen Bolzen 108 und Gabel 102 von dem dem ersten Bauteil 101 abgewandten Wandbereich 109 des Schlitzes 105 übergriffen. In Richtung von Zugkräften zwischen den Bauteilen 101 und 107 herrscht somit ein Formschluß zwischen Bolzen 108 und Gabel 102. Durch eine geeignete Orientierung des bei Zugkräften belasteten Wandungsbereiches 109 (im dargestellten Ausführungsbeispiel verläuft dieser Wandungsbereich 109 im wesentlichen senkrecht zu den Kraftrichtungen a und senkrecht zu der gemeinsamen Längsachse 118 der Bolzen 108) wird bei einer Zugbelastung zumindest die Ausbildung von solchen Kraftkomponenten verhindert, die den Bolzen 108 aus dem Schlitz 105 herausbewegen könnten.

Die Federklammer 114 weist ein Basisteil 119 auf, das die beiden Federschenkel 115 und 116 miteinander verbindet. Das Basisteil 119 weist eine Federschlaufe 120 auf, durch die das Basisteil 119 im wesentlichen in seiner Längsrichtung eine erhöhte Elastizität aufweist, so daß die Federschenkel 115 und 116 elastisch zueinander bewegbar sind. Dieses Elastizität wird benötigt, um die Federklammer 114 in der dargestellten Weise an der Wange 103 zu befestigen. Die Wange 103 weist an ihren gegenüberliegenden Längskanten in der Nähe der Basis 104 jeweils eine Vertiefung 121 auf, in welche je einer der Federschenkel 115 bzw. 116 im Bereich seiner Anbindung an das Basisteil 119 insbesondere unter Vorspannung eingreift. Dabei sind dann die Federschenkel 115 und 116 auf der einen Seite der Wange 103 und das Basisteil 119 auf der anderen Seite der Wange 103 angeordnet. Die Wange 103 kann zusätzlich oder alternativ auf der den Federschenkeln 115 und 116 abgewandten Außenseite vorstehende Vorsprünge 122 aufweisen, die nach Art eines Widerlagers wirken und an denen sich die Federschlaufe 120 zur Festlegung der Federklammer 114 abstützt. Die Federklammer 114 ist vorzugsweise einteilig aus einem Federdraht geformt.

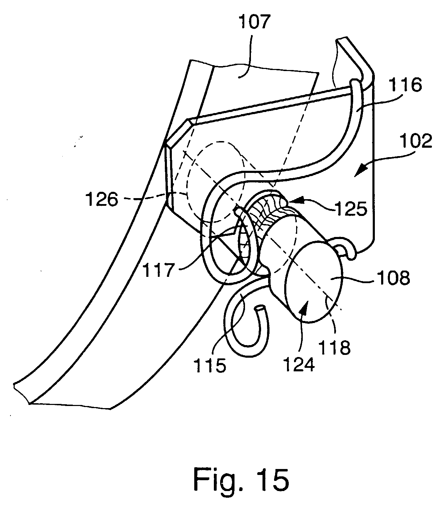

Entsprechend Fig. 15 können die beiderseits des zweiten Bauteils 107 angeordneten Bolzen 108 dadurch ausgebildet werden, daß ein Steckbolzen 124 durch eine Öffnung 126 im zweiten Bauteil 107 durchgesteckt ist, wobei die Bolzen 108 dann die vom zweiten Bauteil 107 abstehenden axialen Endbereiche des Steckbolzens 124 bilden. Dieser Steckbolzen 124 muß sicher gehaltert sein, damit sich die erfindungsgemäße Verbindung nicht selbsttätig lösen kann. Herkömmlicherweise wird dazu der Steckbolzen 124 mit dem zweiten Bauteil 107 verschweißt. Dies ist jedoch aufwendig und zeitintensiv. Alternativ kann der Steckbolzen 124 mittels eines Pressitzes in der Öffnung 126 gehaltert sein, wobei jedoch das Einbringen des Steckbolzens 124 dann relativ aufwendig ist, wenn der Pressitz so stark gewählt ist, daß er sicher eine Axialverstellung des Steckbolzens 124 verhindert.

Entsprechend einem erfindungsgemäßen Vorschlag kann die Sicherheit der Positionierung des Steckbolzens 124 auch dadurch gewährleistet werden, daß am Umfang des Steckbolzens 124 in dessen axialen Endbereich bzw. in dessen Bolzen 108 eine quer zur Längsachse 118 des Bolzens 108 und somit des Steckbolzens 124 verlaufende Nut 125 eingebracht ist, in die an der Gabel 102 gehalterte Sicherungsmittel eingreifen. Im in Fig. 15 dargestellten Ausführungsbeispiel ist die Nut 125 als Ringnut ausgebildet. Die Nut 125 ist bezüglich der Längsachse 118 derart am Bolzen 108 positioniert, daß sowohl der untere, erste Federschenkel 115 als auch der Endbereich 117 des oberen, zweiten Federschenkels 116 als Sicherungsmittel in diese Nut 125 eingreifen und eine formschlüssige Sicherung gegen eine Axialverstellung des Steckbolzens 124 ausbilden. Aufgrund der vorgeschlagenen Sicherung des Steckbolzens 124 kann eine weniger stark wirkende Presspassung oder eine Gleitpassung zwischen dem Steckbolzen 124 und der Öffnung 126 vorgesehen werden, wodurch sich die Montage des Steckbolzens 124 vereinfacht.

## Patentansprüche

1. Verbindung zwischen einem ersten Bauteil und einem zweiten Bauteil, mit folgenden Merkmalen:
- das erste Bauteil (1;101) weist eine U-förmige Gabel (2;102) mit zwei im wesentlichen parallelen, sich gegenüberliegenden Wangen (4;103) auf,
- ein Bereich des zweiten Bauteiles (3;107) ist zwischen den Wangen (4;103) der Gabel (2;102) des ersten Bauteiles (1;101) angeordnet und
- ein Bolzen (7;108) erstreckt sich quer zu den Ebenen der Wangen (4;103) durch diese und durch den dazwischenliegenden Bereich des zweiten Bauteiles (3;107) und ist einerseits mit dem ersten Bauteil (1;101) und andererseits mit dem zweiten Bauteil (3;107) kraftübertragend verbunden, derart, daß Schwenkbewegungen zwischen dem ersten Bauteil (1;101) und dem zweiten Bauteil (3;107) um die Längsachse des Bolzens (7;108) möglich sind,
**gekennzeichnet durch folgende Merkmale:**
- der Bolzen (7;108) ist am zweiten Bauteil (3;107) befestigt,
- die Wangen (4;103) der Gabel (2;102) sind an ihren freien Enden mit U-förmigen Aufnahmen (5;105) versehen, in welche der Bolzen (7;108) quer zu seiner Längsachse einbringbar ist,
- im Bereich der Aufnahmen (5;105) sind an der Wange (4;103) Federmittel (8;114) angebracht, die den in die Aufnahmen (5;105) eingebrachten Bolzen (7;108) gegen eine innere Wandung der Aufnahmen (5;105) anliegend vorspannen.

2. Verbindung nach Anspruch 1,
**dadurch gekennzeichnet,**
daß die Wandung, an welcher der Bolzen (7) in der Aufnahme (5) zur Anlage kommt, zum Bolzen (7) hin konkav ausgebildet ist.

3. Verbindung nach Anspruch 2,
**dadurch gekennzeichnet,**
daß die konkave Wandung einen Radius aufweist, der im wesentlichen gleich dem Radius des Querschnittes des Bolzens (7) ist.

4. Verbindung nach einem der Ansprüche 1 bis 3,
**dadurch gekennzeichnet,**
daß jedes Federmittel (8) als U-förmige Federklammer (9) ausgebildet ist, die derart an der jeweiligen Wange (4) der Gabel (2) angebracht ist, daß die offene Seite der Federklammer (9) mit der offenen Seite der Aufnahme (5) in der Wange (4) im wesentlichen deckungsgleich ist, wobei sich gegenüberliegende Federarme (10) der Federklammer (9) den in die Aufnahme (5) eingebrachten Bolzen (7) im Bereich der offenen Seite der Aufnahme (5) mindestens teilweise umfassen und diesen an die der offenen Seite gegenüberliegende Wandung der Aufnahme (5) anliegend vorspannen.

5. Verbindung nach einem der Ansprüche 1 bis 4,
**dadurch gekennzeichnet,**
daß Sicherungsmittel (15, 16) vorgesehen sind, die den in die Aufnahmen (5) eingebrachten Bolzen (7) an der Gabel (2) sichern.

6. Verbindung nach Anspruch 5,
**dadurch gekennzeichnet,**
daß jedes Sicherungsmittel in Form einer in Längsrichtung des Bolzens (7) federnd nachgiebigen Zunge (15) ausgebildet ist, die sich im wesentlichen parallel zu einer der Wangen (4) erstreckt, an dieser bzw. an der Gabel (2) in einem von der offenen Seite der Aufnahme (5) der Wange (4) abgewandten Bereich befestigt ist und eine Öffnung (16) enthält, in die der gesicherte Bolzen (7) hineinragt und dabei radial zumindest in einem der offenen Seite der Aufnahme (5) in der Wange (4) zugewandten Bereich von einem Innenumfang der Öffnung (16) eingefaßt ist.

7. Verbindung nach Anspruch 1
**dadurch gekennzeichnet,**
daß zur bidirektionalen Übertragung von Zug- und Druckkräften zwischen dem ersten Bauteil (101) und dem zweiten Bauteil (107) der Bolzen (108) wenigstens in den Kraftübertragungsrichtungen (a) durch eine Wandung (111) der als einseitig offener Schlitz (105) ausgebildeten Aufnahme eingefaßt ist.

8. Verbindung nach Anspruch 7,
**dadurch gekennzeichnet,**
daß ein durch Zugkräfte vom Bolzen (108) belasteter Wandungsbereich (109) des Schlitzes (105) im wesentlichen senkrecht zur Kraftrichtung (a) und senkrecht zur Bolzenlängsachse (118) verläuft.

9. Verbindung nach einem der Ansprüche 7 und 8,
**dadurch gekennzeichnet,**
daß der durch Druckkräfte vom Bolzen (108) belastete Wandungsbereich (110) des Schlitzes (105) in Form einer Rampe ausgebildet ist, die bei Druckbelastungen der Verbindung eine Vorspannung des Bolzens (108) in den Schlitz (105) hinein bewirkt.

10. Verbindung nach einem der Ansprüche 7 bis 9,
**dadurch gekennzeichnet,**
daß die Federmittel (114) einen ersten Federschenkel (115) aufweisen, der den Bolzen (108) relativ zur Gabel (102) im wesentlichen quer zur Kraftübertragungsrichtung (a) und quer zur Bolzenlängsachse (118) gegen die Wandung (111) des Schlitzes (105) anliegend vorspannt.

11. Verbindung nach einem der Ansprüche 7 bis 12.
**dadurch gekennzeichnet,**
daß die Federmittel (114) einen zweiten Federschenkel (116) aufweisen, der den Bolzen (108) relativ zur Gabel (102) in Kraftübertragungsrichtung (a) gegen den bei Druckkräften vom Bolzen (108) belasteten Wandungsbereich (110) anliegend vorspannt.

12. Verbindung nach den Ansprüche 10 und 11,
**dadurch gekennzeichnet,**
daß die Federschenkel (115,116) über ein Basisteil (119) miteinander verbunden sind, so daß sich eine im wesentlichen U-förmige Federklammer (114) ausbildet.
